# EUROPEAN PATENT SPECIFICATION

(11) **EP 2 853 175 B1**
(45) Date of publication and mention of the grant of the patent: **14.08.2019**
(21) Application number: 13196397.7
(22) Date of filing: 10.12.2013
(51) Int. Cl.: A47C 27/06

(54) **High Tension Coil Spring Structure for Bed Mattress Having Means for Preventing Friction Noise**
Hochspannungs-Spulenfederstruktur für eine Bettmatratze mit Mitteln zur Verhinderung des Reibungslärms
Structure de ressort de bobine à tension élevée pour matelas de lit comprenant des moyens pour empêcher le bruit de frottement

(30) Priority: 25.09.2013 KR 20130113990; 30.09.2013 KR 20130115999; 11.11.2013 KR 20130136458
(43) Date of publication of application: 01.04.2015
(73) Proprietor: Ahn, Yoo Soo, Gyeonggi-do (KR)
(72) Inventor: Ahn, Yoo Soo, Gyeonggi-do (KR)
(74) Representative: Betten & Resch

(56) References cited:
- KR-B1- 100 820 579
- US-B2- 7 677 541
- US-B2- 8 109 490

## Description

### BACKGROUND

The present disclosure relates to a high tension coil spring structure for a bed mattress having exposed wiring portions which are formed on coil springs and cooperate with spring bodies to absorb an external load, and more particularly, to a high tension coil spring structure for a bed mattress having means for preventing friction noise which can significantly increase the elasticity of exposed wiring portions as well as fundamentally preventing noise that is created by friction between the exposed wiring portions and surrounding wiring portions while the exposed wiring portions are being compressed.

### Description of Related Art

In general, a bed mattress is an instrument for sleeping which provides a cushion or a buffering force using cushion members which are respectively stacked on the upper surface and the lower surface of a spring assembly. The spring assembly includes a plurality of coil springs which are provided between upper and lower frames inside the bed mattress and are regularly arranged in columns and rows and spaced apart from each other at preset distances.

In addition, "exposed wire springs" were developed, and have been used as means for enhancing the cushioning and buffering force of the bed mattress. The exposed wire springs include coil springs which are disposed in the top-bottom direction between the upper and lower edge members of the frame such that the coil springs protrude above the upper edge member.

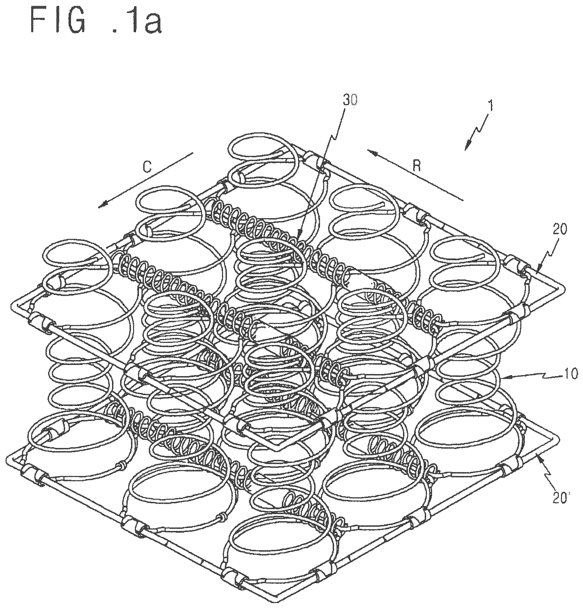

For instance, as shown in FIG. 1a, a spring assembly 1 includes upper and lower edge members 20 and 20', coil springs 10 which are arranged in rows and columns R and C within the space between the upper edge member 20 and the lower edge member 20', and helical coils 30 which are spirally engaged with the coil springs 10 in the direction of rows R.

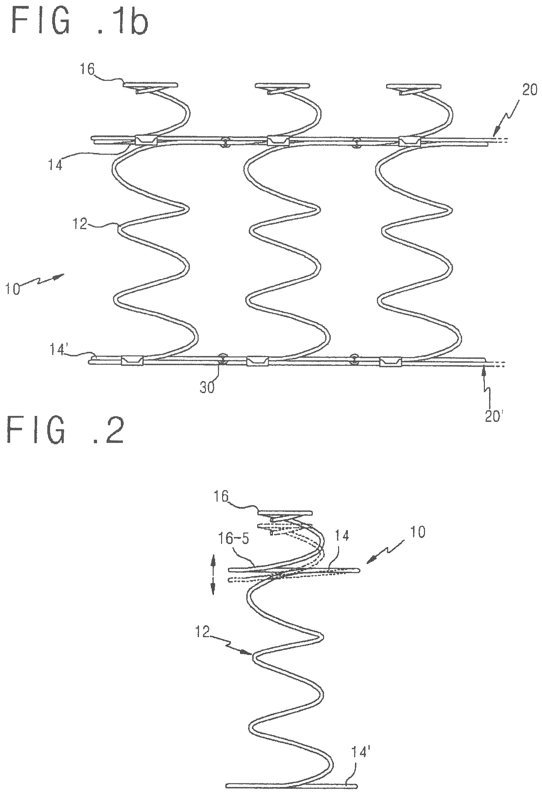

In addition, as shown in FIG. 1b, each of the coil springs 10 includes a body wiring portion 12 situated in a space between the upper edge member 20 and the lower edge member 20', end wiring portions 14 provided on both ends of the body wiring portion 12 so as to be engaged with the upper and lower edge members 20 and 20', and an exposed wiring portion 16 extending from one of the end wiring portions 14 so as to be exposed from the edge member 20.

Here, in the case of attempting to set the spring assembly 1, when the helical coils 30 are engaged in the state in which the coil springs 10 are set at preset distances from each other between the edge members 20 and 20', the exposed wiring portions 16 are set such that they protrude above the upper edge member 20 or below the lower edge member 20'.

In addition, when the spring assembly 1 is applied to a bed mattress, the exposed wiring portions 16 absorb shock when a small load is applied in response to, for example, a user rolling over on the bed, and the body wiring portions 12 absorb the shock when a large load is applied from the user.

The coil springs 12 advantageously increase the comfort and convenience of the user since the exposed wiring portions 16 and the body wiring portions 12 properly distribute the shock-absorbing function in response to variations in the load applied to the bed mattress. However, the coil springs 12 have, at least, the following problems.

First, as shown in FIG. 2, in the process in which the coil spring 10 is compressed at the moment that the bed mattress is subjected to a load, a contact wiring portion 16-5 of the exposed wiring portion 16 abuts to the end wiring portion 14 which is positioned below while moving down. This consequently creates noise due to contact between the exposed wiring portion 16 and the end wiring portion 14.

Second, when a large load is applied to the bed mattress, the exposed wiring portion 16 of the spring assembly is compressed, and concurrently, the body wiring portion 12 is compressed at high speed. Rapid compression of the exposed wiring portion 16 increases friction between the exposed wiring portion 16 and the end wiring portion 14, thereby creating friction noise.

Third, when a load is applied to the bed mattress, the exposed wiring portion abuts to the end wiring portion while being compressed, whereby the elasticity of the exposed wiring portion is limited. Accordingly, solutions for preventing stress due to friction noise between the exposed wiring portions 16 and the end wiring portions 14 while the bed mattress is being used and for increasing the longevity of the coil spring are urgently required.

As shown in FIG. 3A, an approach was proposed in a coil spring (Korean Patent No. 10-0717543, United States Patent No. 7,677,541 B2) that was previously invented by the applicant. This coil spring includes a body spring 10 and an exposure wire spring 20, in which a connection end portion 24 which connects the exposure wire spring 20 to the body spring 10 has a contact-preventing end 30.

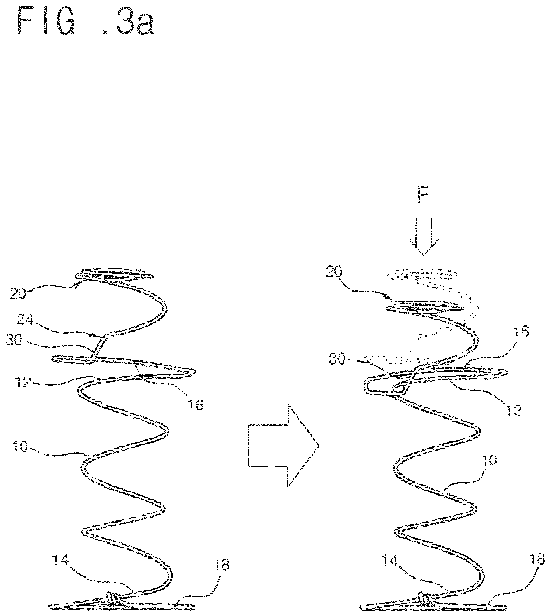

Although the coil spring shown in FIG. 3A prevents frictional noise between the body spring 10 and the exposure wire spring 20 using the contact-preventing end 30 to a certain extent, the coil spring fails to completely prevent frictional noise since the exposure wire spring 20 comes into contact with the body spring 10 when the range in which the exposed wire spring 20 moves downward exceeds the height of the contact-preventing end 30.

In addition, although the coil spring shown in FIG. 3A is focused on the contact-preventing end 30 which prevents frictional noise, there is a drawback in that the amount of elasticity with which the exposure wire spring 20 moves upward and downward is limited since the exposure wire spring 20 has a small number of turns.

In addition, as shown in FIG. 3B, an approach was proposed in a coil spring (Korean Patent No. 10-0717545, United States Patent No. 8,109,490) that was previously invented by the applicant. This coil spring including a body spring 10 and an exposure wire spring 20, in which a connection end portion 24 which connects the exposure wire spring 20 to the body spring 10 has contact-preventing/rigidity-reinforcing ends 30 and 32, thereby preventing frictional noise between the body spring 10 and the exposure wire spring 20.

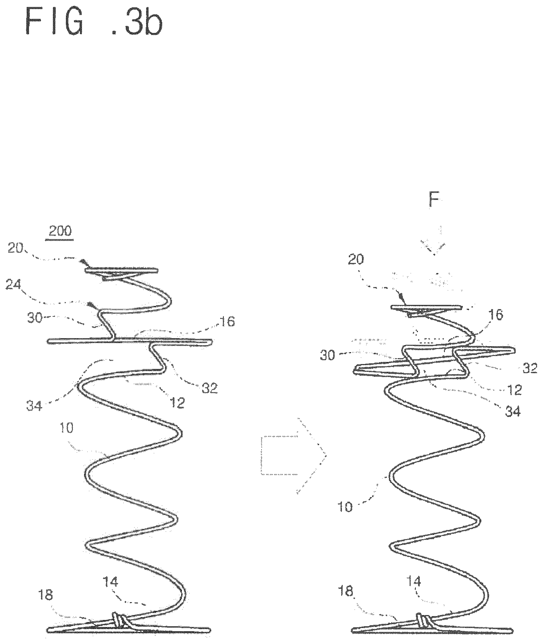

Although the coil spring shown in FIG. 3B prevents frictional noise between the body spring 10 and the exposure wire spring 20 using the contact-preventing/rigidity-reinforcing ends 30 and 32 to a certain extent, the coil spring fails to completely prevent frictional noise since the exposure wire spring 20 comes into contact with the body spring 10 when the range in which the exposed wire spring 20 moves downward exceeds the height of the contact-preventing/rigidity-reinforcing ends 30 and 32.

In addition, although the coil spring shown in FIG. 3B is focused on the contact-preventing/rigidity-reinforcing ends 30 and 32 which prevent frictional noise, there is a drawback in that the amount of elasticity with which the exposure wire spring 20 moves upward and downward is limited since the exposure wire spring 20 has a small number of turns.

Furthermore, as shown in FIG. 3C, an approach was proposed in a coil spring (Korean Patent No. 10-0820579) that was previously invented by the applicant. This coil spring including a body portion 115a and an exposed wiring portion 115b. An uppermost wiring portion 30 formed on the body portion 115a has concave portions 60 and 70 which absorb the return load of the body portion 115a, thereby preventing frictional noise between the body portion 115a and the exposed wiring portion 115b.

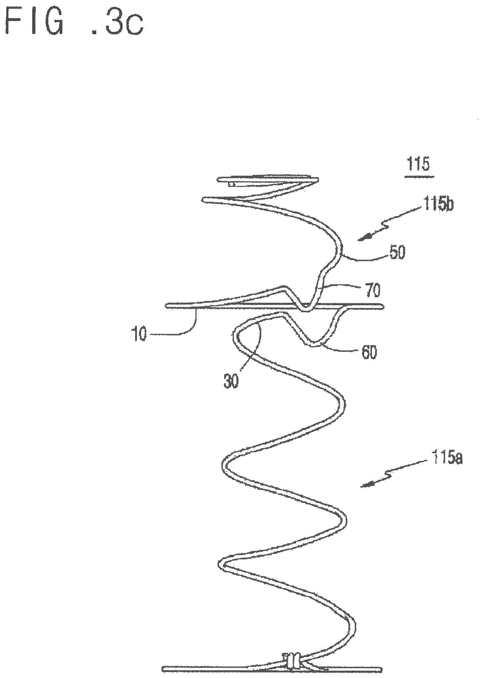

Although the coil spring shown in FIG. 3C prevents frictional noise between the body portion 115a and the exposed wiring portion 115b using the concave portions 60 and 70 to a certain extent, the coil spring fails to completely prevent frictional noise since the exposed wiring portion 115b comes into contact with the body portion 115a when the range in which the exposed wiring portion 115b moves downward exceeds the height of the concave portions 60 and 70.

In addition, although the coil spring shown in FIG. 3C is focused on the concave portions 60 and 70 which prevent frictional noise, there is a drawback in that the amount of elasticity with which the exposed wiring portion 115b moves upward and downward is limited since the exposed wiring portion 115b has a small number of turns.

The information disclosed in the Background section is provided only for better understanding of the background, and should not be taken as an acknowledgment or any form of suggestion that this information forms a prior art that would already be known to
a person skilled in the art.
Document KR100820579B1 describes a shock-absorbing device of a coil spring for a bed mattress is provided to improve convenience and comfortableness due to double cushion, and to minimize deformation of wires by changing a shock-absorbing structure of the wires of the coil spring. A shock-absorbing device of a coil spring for a bed mattress includes: a body part(115a) arranged between an upper frame member and a lower frame member in a vertical direction; an upper exposed wire part(115b) integrally formed on an upper bending part(20) connected to an upper connection end(10) of the body part, and exposed to the upper frame member; and a first convex part(40) convexly formed on the uppermost wire(30) of the body part for absorbing a return load of the body part.

### BRIEF SUMMARY

The present invention is defined in claim 1. The dependent claims define embodiments thereof.
Various aspects provide a high tension coil spring structure for a bed mattress having means for preventing friction noise which can significantly increase the elasticity of an exposed wiring portion which protrudes upward or downward from a spring assembly while fundamentally preventing noise that is created by friction between the exposed wiring portion and a surrounding wiring
portion while the exposed wiring portion is being compressed.

In an aspect, provided is a high tension coil spring structure for a bed mattress that includes: body wiring portions which are disposed regularly at preset distances from each other in the space between an upper edge member and a lower edge member, upper and lower end wiring portions which are provided on both ends of the body wiring portions and set within the range in which the upper and lower edge members are disposed; upper and lower exposed wiring portions which extend from at least one of the upper and lower end wiring portions so as to be exposed from the upper or lower edge members; diameter-increasing portions which are provided on at least one of the upper and lower end wiring portions and define spaces in which upper and lower exposure start wiring portions of the upper and lower exposed
wiring portions move upward and downward while the coil spring structure is being compressed; and means for preventing friction noise which are provided on at least one of the upper and lower end wiring portions. The means for preventing friction noise include rigid support ends which are provided on at least one of the body wiring portion and the upper and lower exposed wiring portions, and absorb shock by absorbing a compressive load applied from the upper and lower exposed wiring portions. The diameter-increasing portions provide spaces in which upper and lower exposure start wiring portions move upward and downward while the coil spring structure is being compressed, thereby preventing frictional noise between the upper and lower end wiring portions and the upper and lower exposure start wiring portions. When a compressive load is applied to the coil spring structure, a plurality of wiring portions formed in the upper and lower exposed wiring portions move upward and downward along the side walls of the rigid support ends, thereby increasing elasticity.

As set forth above, the following effects are provided.

First, since the coil spring structure is provided with the diameter-increasing portion which forms a path along which the exposed wiring portion moves upward and downward, it is possible to consequently remove friction that is created due to contact between the exposed wiring portion and the end wiring portion while the exposed wiring portion is being compressed, thereby fundamentally preventing noise.

Second, since the coil spring structure is provided with the diameter-increasing portion which forms a path along which the exposed wiring portion moves upward and downward, the exposed wiring portion and the body wiring portion move only upward and downward without being displaced or deformed in the lateral direction, thereby increasing longevity.

Third, in the state where friction noise between the exposed wiring portion and the end wiring portion of the coil spring is prevented, the exposed wiring portions are provided with a plurality of wiring portions such that the wiring portions form a spring layer separate from the spring body. Consequently, small and large loads applied to the bed mattress are discriminated and suitable amounts of buffering force are provided, and at the same time, the elasticity of the upper and lower exposed wiring portions is significantly enhanced, thereby improving the quality of a product.

Fourth, the process of foaming the exposed wiring portion, which was proposed in Korean Patent No. 444347 (United States Patent No. 6,983,503) as means for preventing friction noise in the coil spring, becomes unnecessary. It is possible to preclude equipment which seals the exposed wiring portion and the sealing process as well as reducing the price for purchasing that equipment and the cost for the process, thereby improving productivity.

The described methods and apparatuses have other features and advantages which will be apparent from, or are set forth in greater detail in the accompanying drawings, which are incorporated herein, and in the following Detailed Description, which together serve to explain certain principles.

### BRIEF DESCRIPTION OF THE DRAWINGS

FIG. 1A and FIG. 1B are views showing the assembled state of a spring assembly of the related art, in which FIG. 1A is a perspective view showing the assembled state of the spring assembly, and FIG. 1B is a cross-sectional view showing the assembled state of the spring assembly;
FIG. 2 is a cross-sectional view illustrating creation of noise from the coil spring of the related art;
FIG. 3A, FIG. 3B and FIG. 3C are cross-sectional views of coil springs for preventing frictional noise that were previously invented by the applicant;

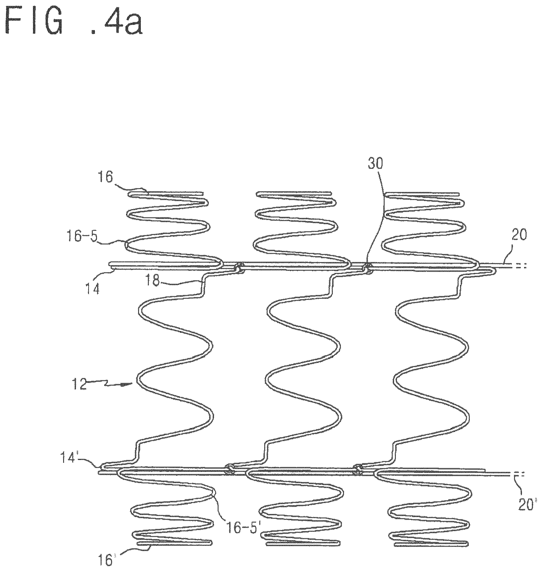

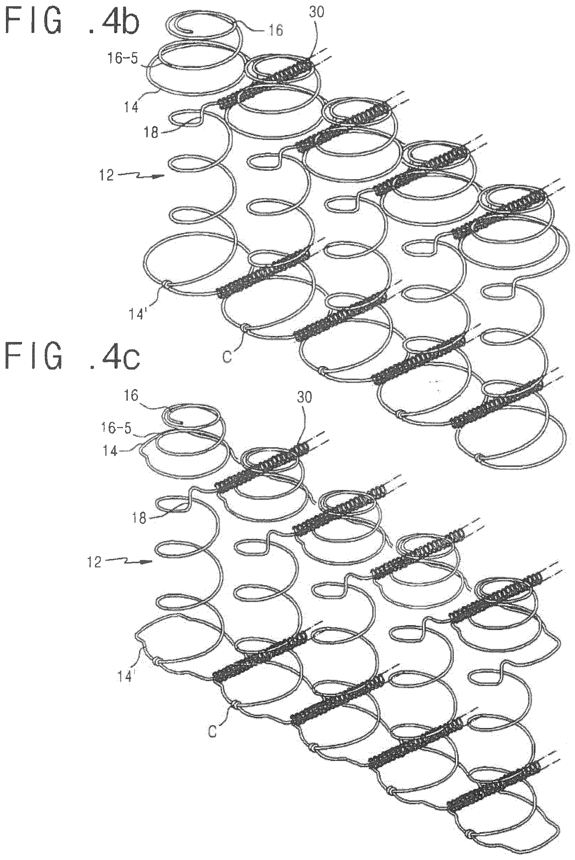

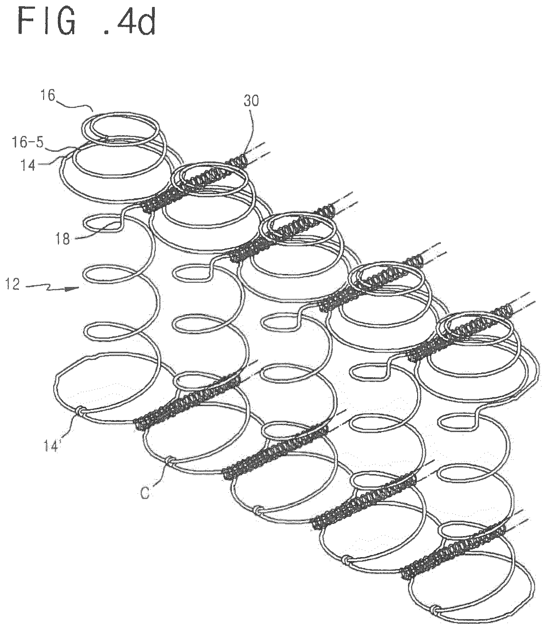

FIG. 4A, FIG. 4B, FIG. 4C and FIG. 4D are views showing the engaged state of a spring assembly, in which FIG. 4A is a cross-sectional view showing the engaged state of the spring assembly, and FIG. 4B to FIG. 4D are perspective views showing the engaged state of
   the spring assembly;

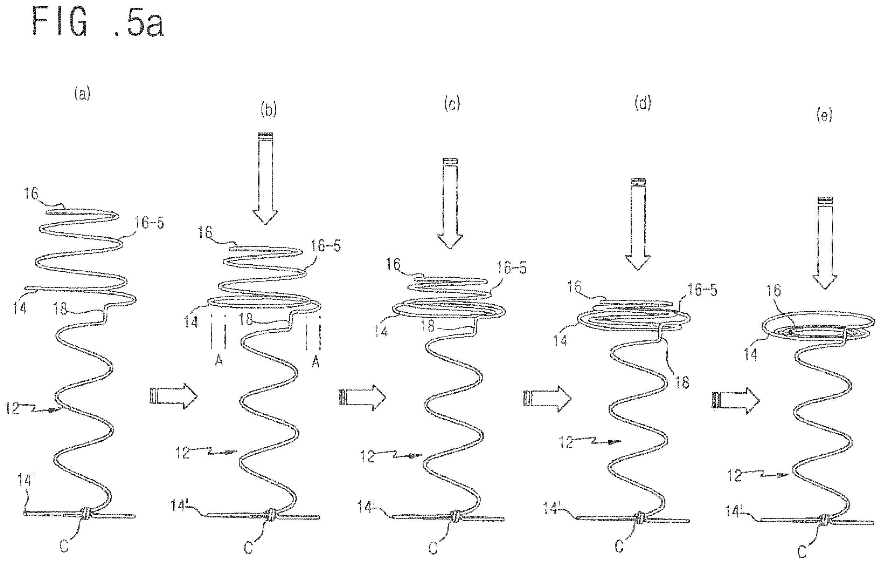

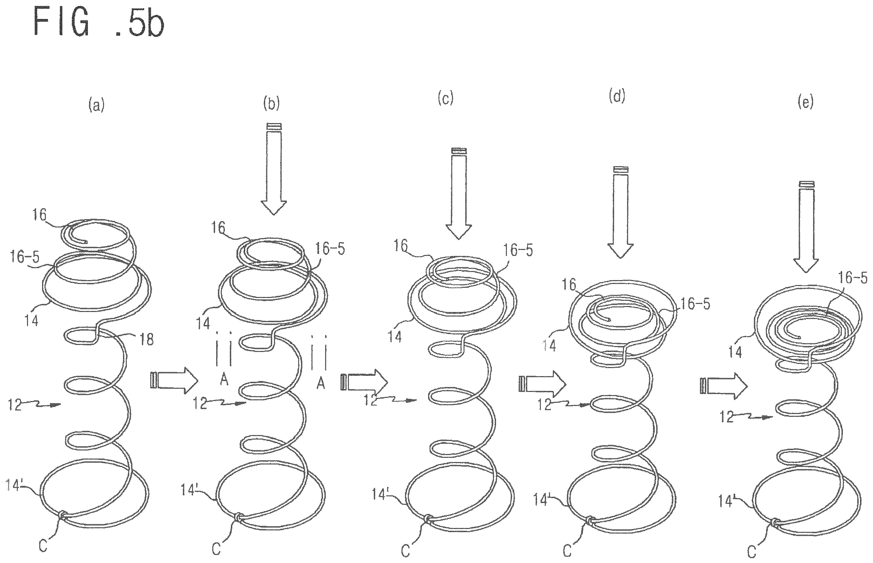

FIG. 5A and FIG. 5B are first conceptual views showing a process in which an upper exposed wiring portion of a coil spring is compressed, upper and lower end wiring portions of the coil spring having the shape of a round spring, in which FIG. 5A is a cross-sectional view showing the process in which the coil spring is compressed, and FIG. 5B is a perspective view showing the process in which the coil spring is compressed;

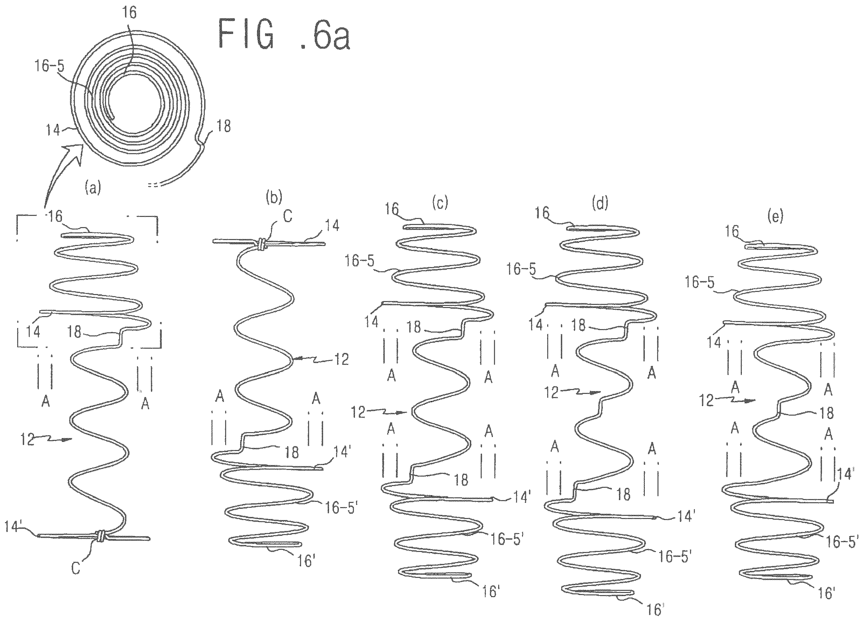

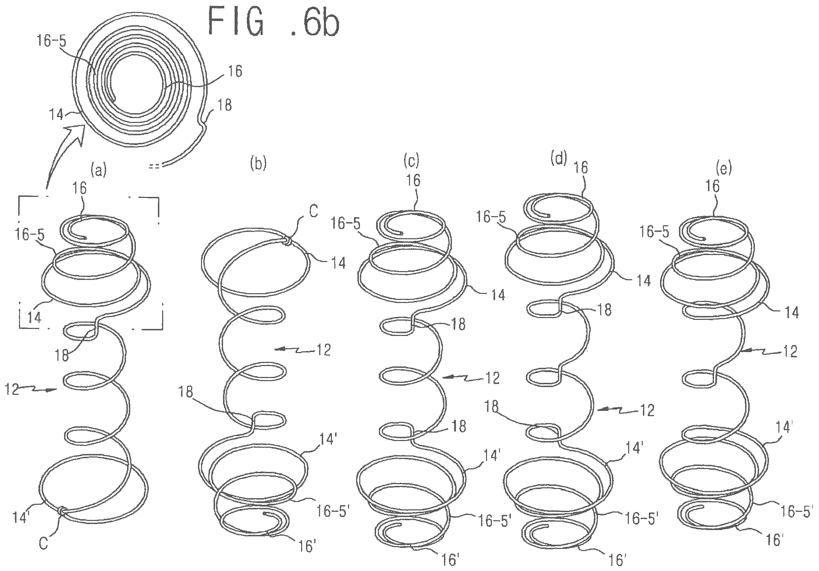

FIG. 6A and FIG. 6B are views showing a coil spring in which upper and lower end wiring portions have the shape of a round spring and a rigid support end is formed in a body wiring portion, in which FIG. 6A is a cross-sectional view showing first to fifth embodiments of the coil spring, and FIG. 6B is a perspective view showing the showing first to fifth embodiments of the coil spring;

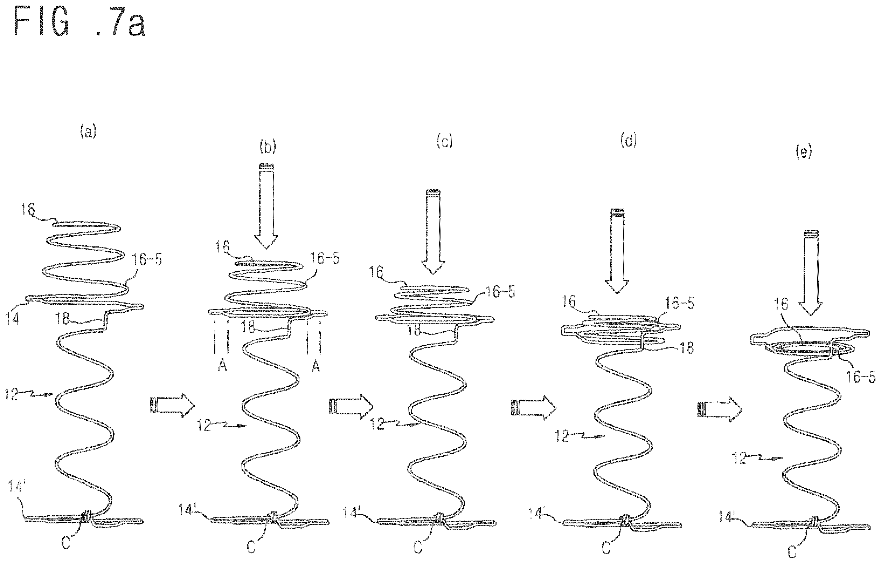

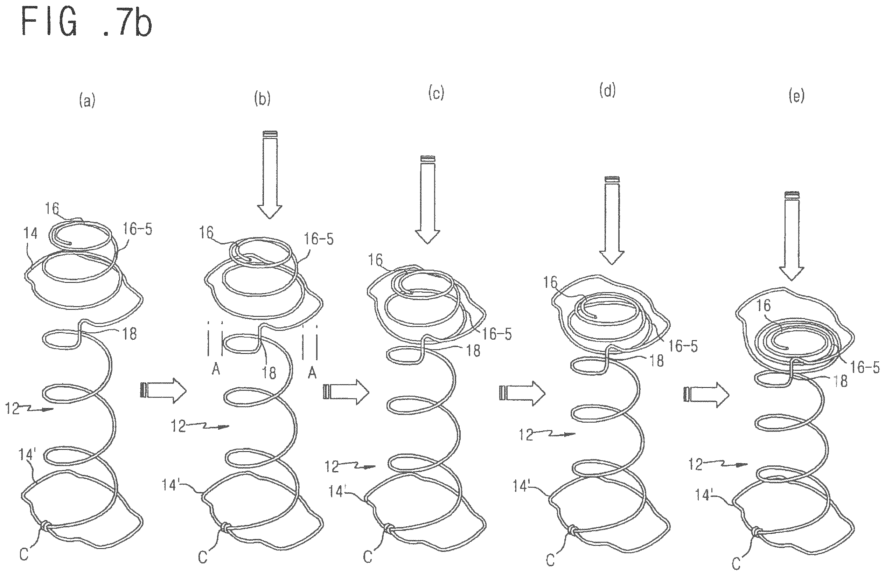

FIG. 7A and FIG. 7B are second conceptual views showing a process in which an upper exposed wiring portion of a coil spring is compressed, upper and lower end wiring portions of the coil spring having the shape of an offset spring, in which FIG. 7A is a cross-sectional view showing the process in which the coil spring is compressed, and FIG. 7B is a perspective view showing the process in which the coil spring is compressed;

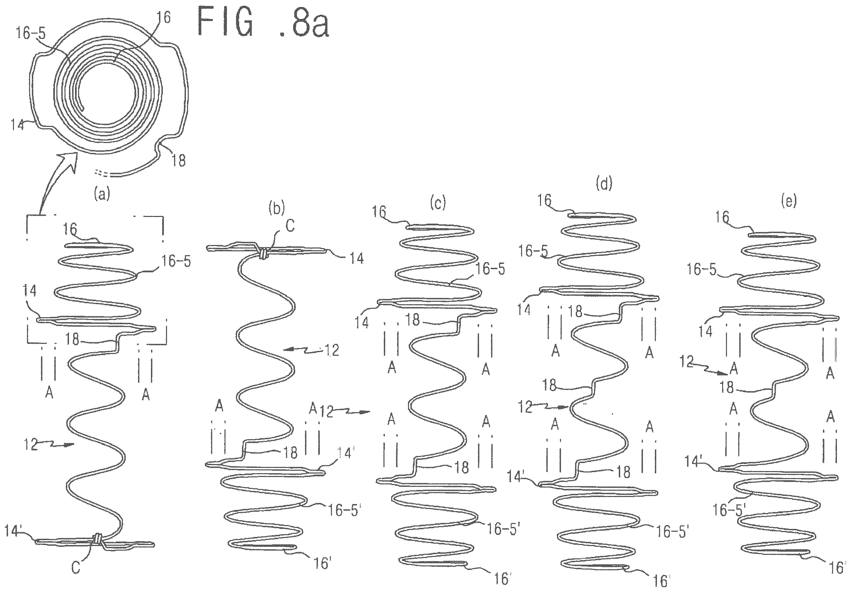

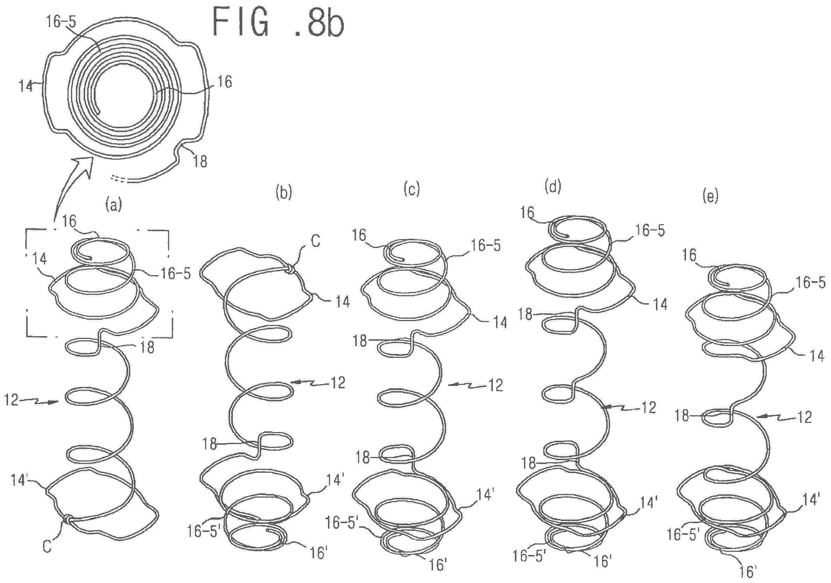

FIG. 8A and FIG. 8B are views showing a coil spring in which upper and lower end wiring portions have the shape of an offset spring and a rigid support end is formed in a body wiring portion, in which FIG. 8A is a cross-sectional view showing sixth to tenth embodiments of the coil spring, and FIG. 8B is a perspective view showing the showing sixth to tenth embodiments of the coil spring;

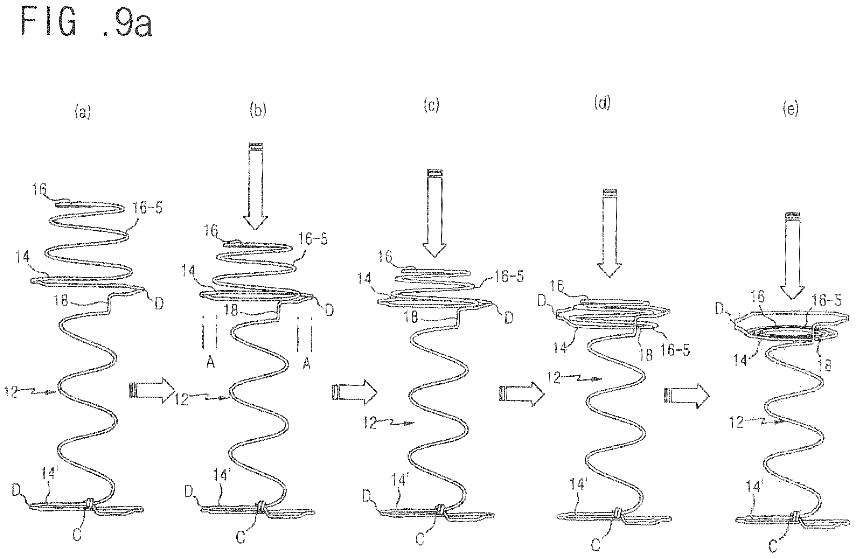

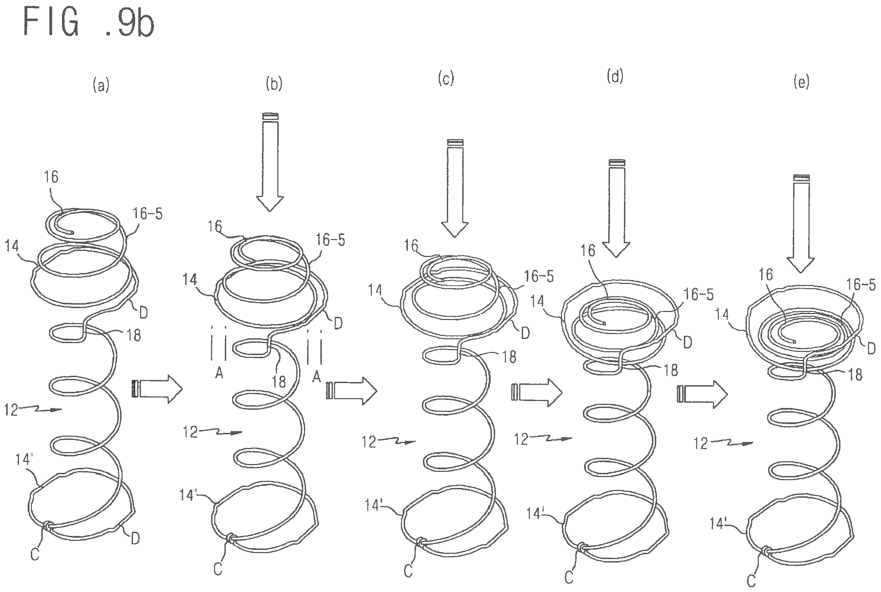

FIG. 9A and FIG. 9B are third conceptual views showing a process in which an upper exposed wiring portion of a coil spring is compressed, upper and lower end wiring portions of the coil spring having the shape of a round-offset spring, in which FIG. 9A is a cross-sectional view showing the process in which the coil spring is compressed, and FIG. 9B is a perspective view showing the process in which the coil spring is compressed;

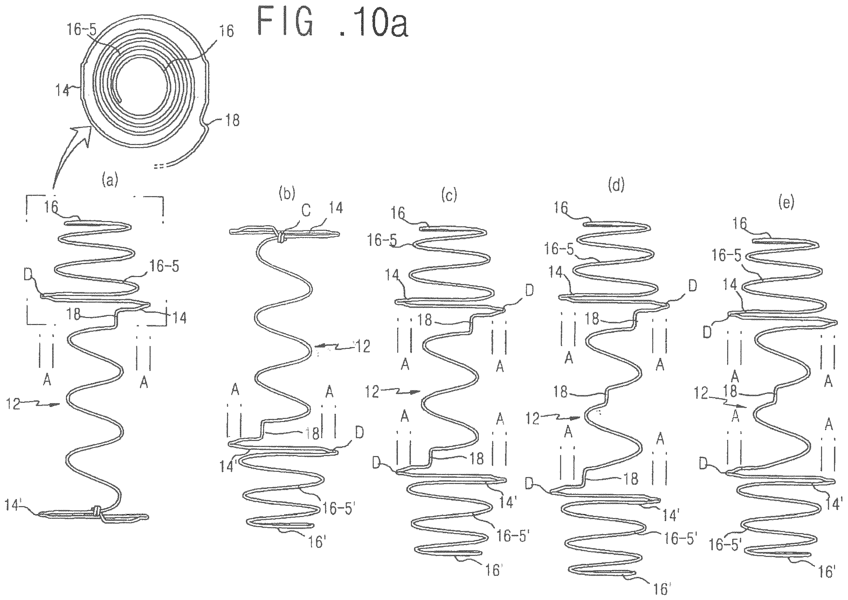

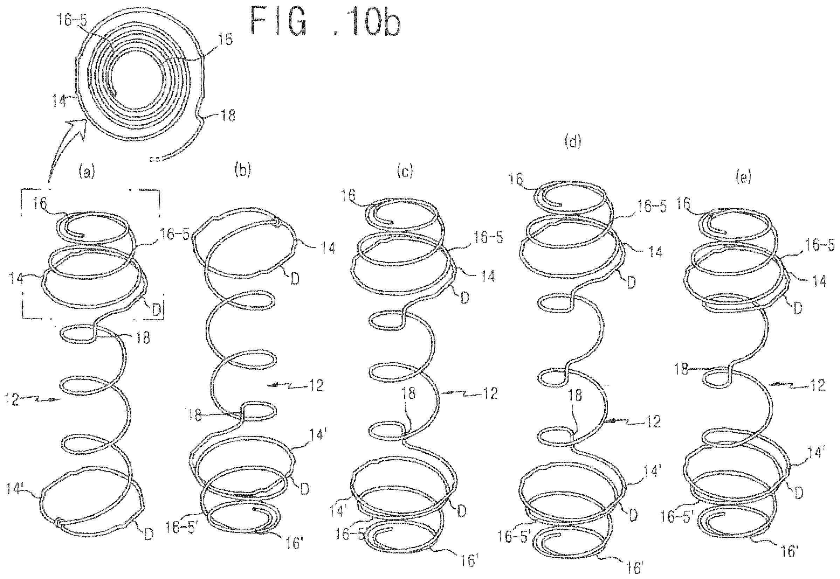

FIG. 10A and FIG. 10B are views showing a coil spring in which upper and lower end wiring portions have the shape of a round-offset spring and a rigid support end is formed in a body wiring portion, in which FIG. 10A is a cross-sectional view showing eleventh to fifteenth embodiments of the coil spring, FIG. 10B is a perspective view showing the showing the eleventh to fifteenth embodiments of the coil spring;

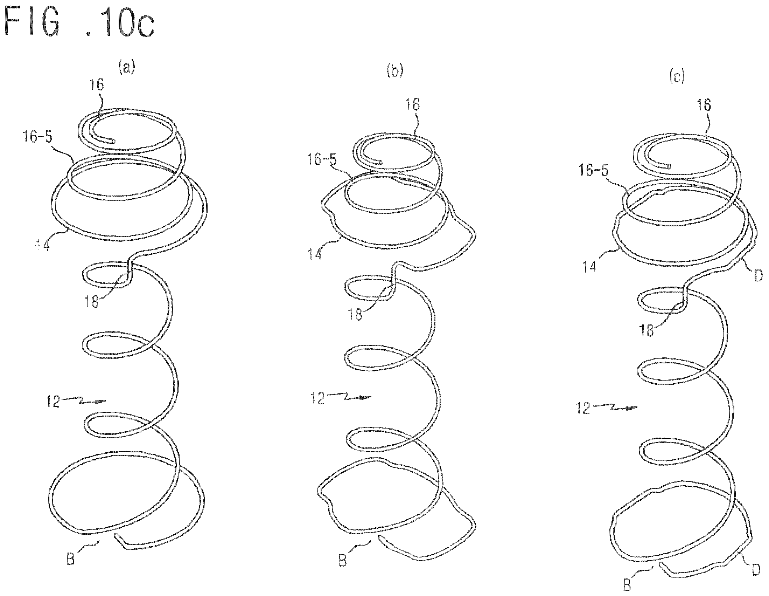

FIG. 10C is a perspective view showing coil springs , in one of which a coil end of a lower end wiring portion forms a linear free end B which is opened without being engaged with a wiring portion, and in another one of which a coil end of an upper exposed wiring portion forms a linear free end B which is opened without being engaged with a wiring portion;

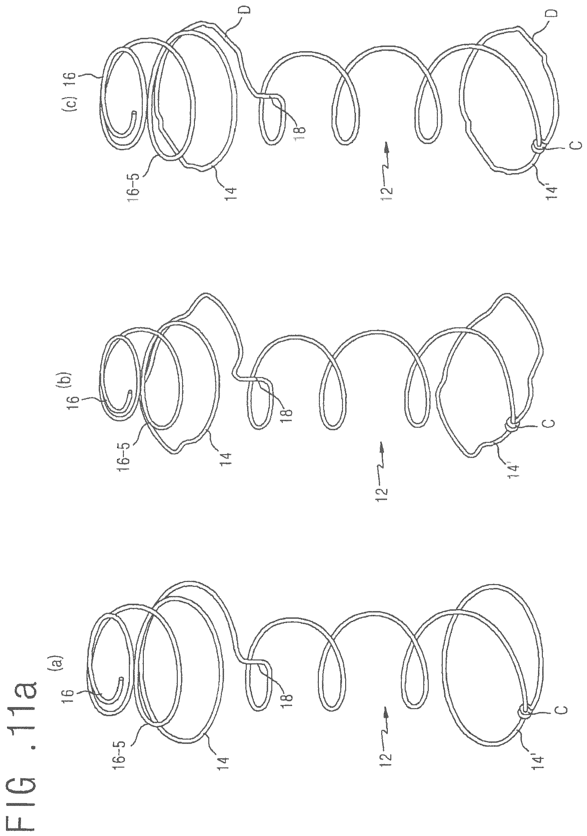

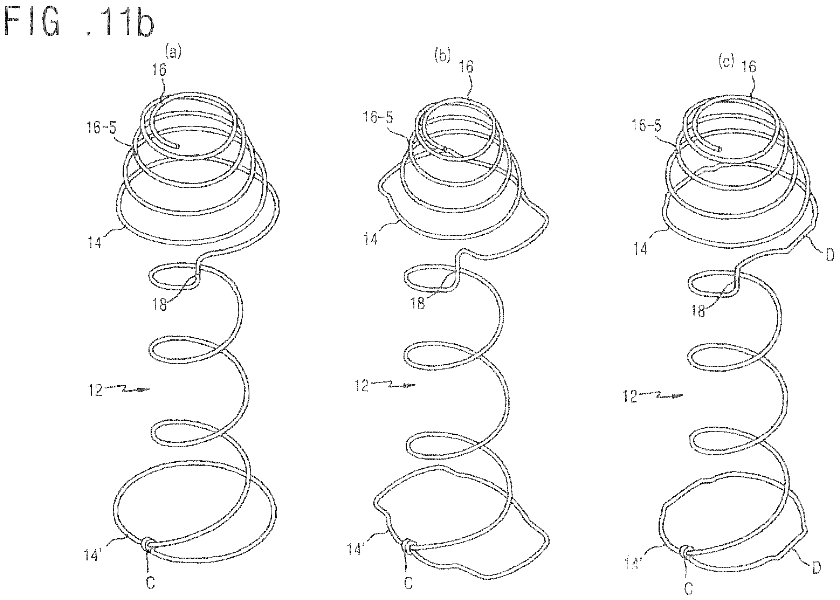

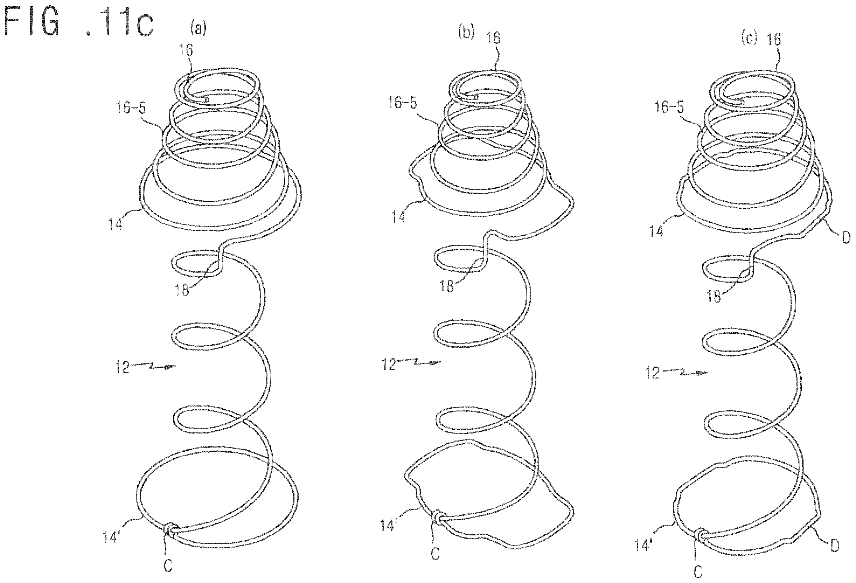

FIG. 11A, FIG. 11B and FIG. 11C are perspective views showing coil springs in each of which a handcuff portion C is formed on a coil end of a lower end wiring portion so as to engage with a wiring portion, in which FIG. 11A is a perspective view showing the coil spring in which the number of turns of the exposed wiring portion is 4, FIG. 11B is a perspective view showing the coil spring in which the number of turns of the exposed wiring portion is 5, and, FIG. 11C is a perspective view showing the coil spring in which the number of turns of the exposed wiring portion is 6;

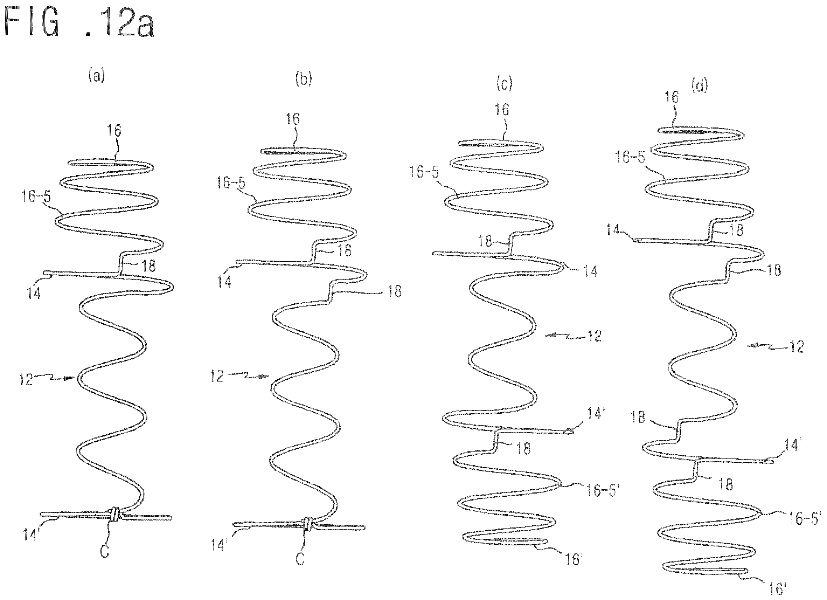

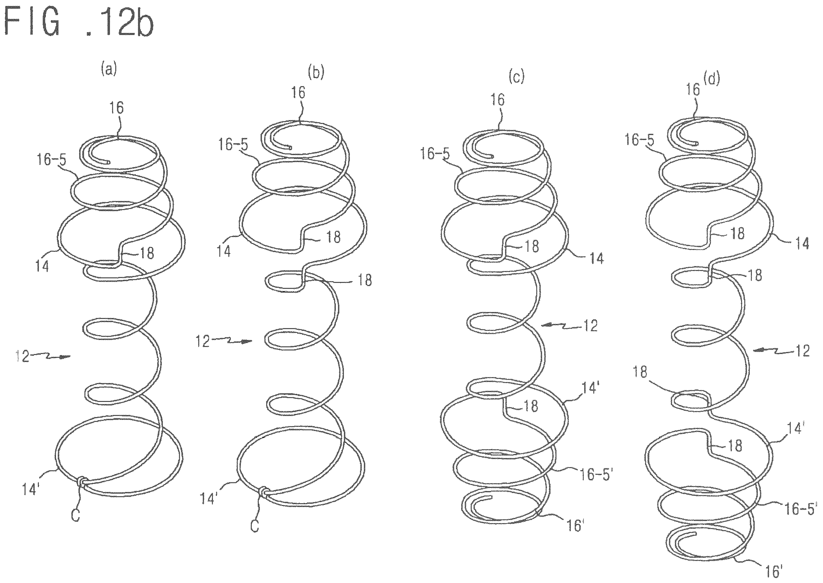

FIG. 12A and FIG. 12B are views showing a coil spring in which upper and lower end wiring portions have the shape of a round spring and a rigid support end is formed in at least one of upper and lower exposed wiring portions, in which FIG. 12A is a cross-sectional view showing sixteenth to nineteenth embodiments of the coil spring, FIG. 12B is a perspective view showing the showing the sixteenth to nineteenth embodiments of the coil
   spring;

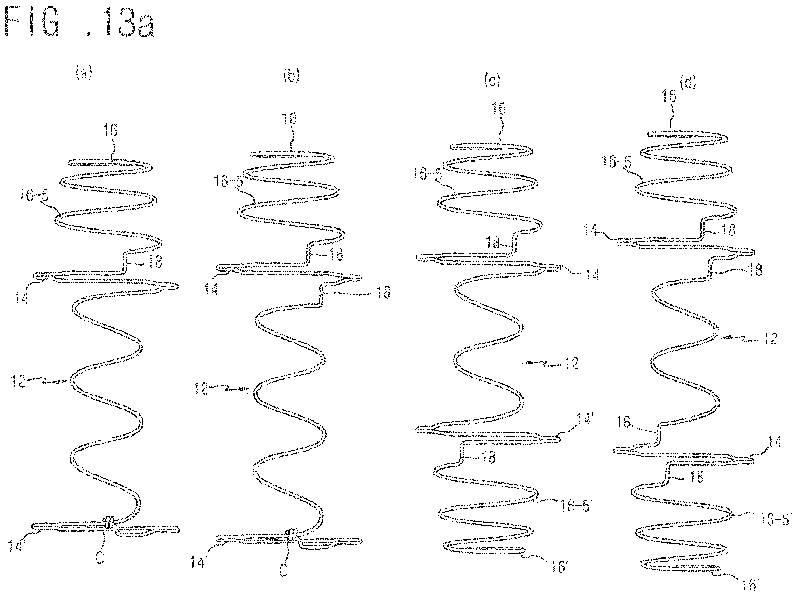

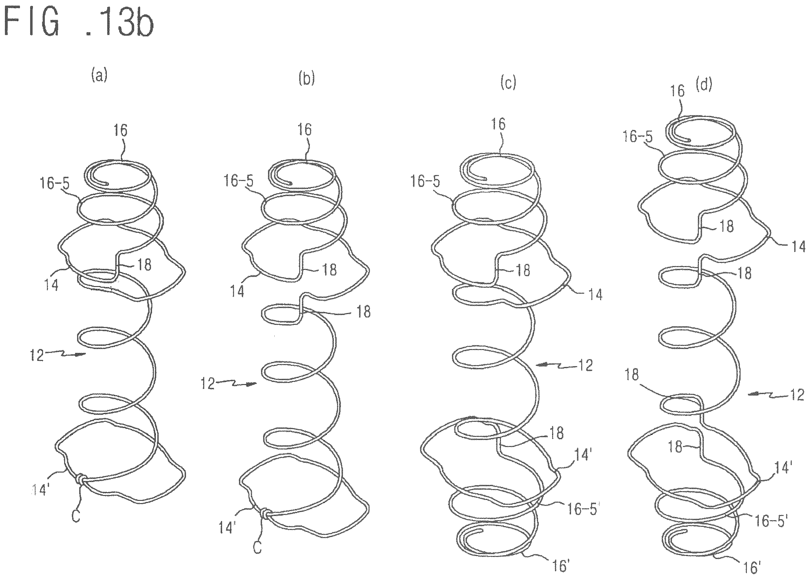

FIG. 13A and FIG. 13B are views showing a coil spring in which upper and lower end wiring portions have the shape of an offset spring and a rigid support end is formed in at least one of upper and lower exposed wiring portions, in which FIG. 13A is a cross-sectional view showing twentieth to twenty third embodiments of the coil spring, FIG. 13B is a perspective view showing the showing the twentieth to twenty third embodiments of the coil spring; and

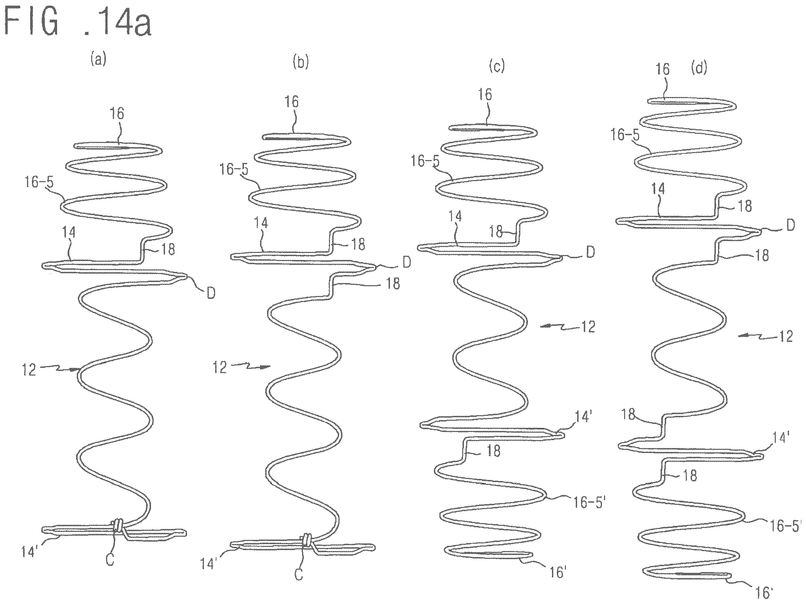

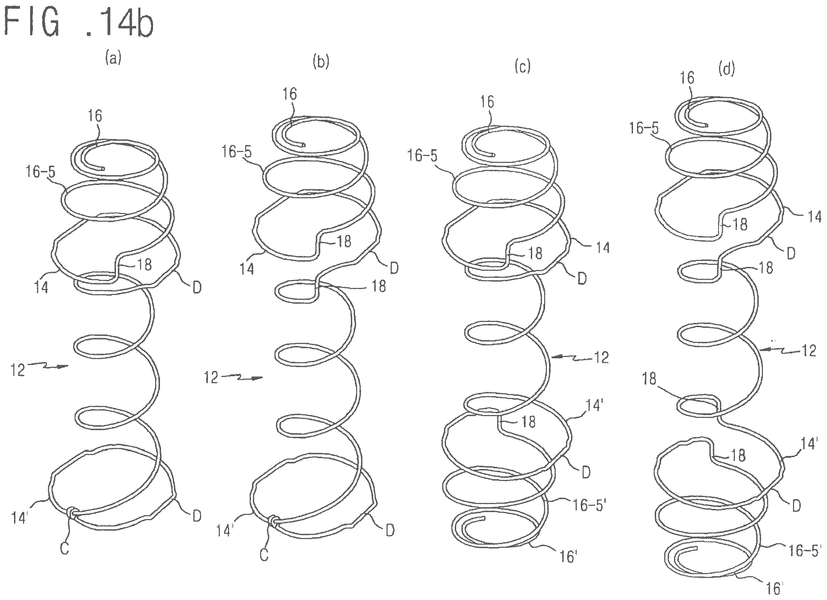

FIG. 14A and FIG. 14B are views showing a coil spring in which upper and lower end wiring portions have the shape of a round-offset spring and a rigid support end is formed in at least one of upper and lower exposed wiring portions, in which FIG. 14A is a cross-sectional view showing twenty fourth to twenty seventh embodiments of the coil spring, FIG. 14B is a perspective view showing the showing the twenty fourth to twenty seventh embodiments of the coil spring.

### DETAILED DESCRIPTION

Reference will now be made in detail to various embodiments, examples of which are illustrated in the accompanying drawings and described below.

As shown in FIG. 4A to FIG. 14B, a high tension coil spring structure for a bed mattress having means for preventing friction noise is provided. The high tension coil spring structure includes body wiring portions 12 which are disposed regularly at preset distances from each other in the space between an upper edge member 20 and a lower edge member 20', upper and lower end wiring portions 14 and 14' which are provided on both ends of the body wiring portions 12 and set within the range in which the upper and lower edge members 20 and 20' are disposed, upper and lower exposed wiring portions 16 and 16' which extend from at least one of the upper and lower end wiring portions 14 and 14' so as to be exposed from the upper or lower edge members 20 or 20', diameter-increasing portions A which are provided on at least one of the upper and lower end wiring portions 14 and 14' and define spaces in which upper and lower exposure start wiring portions 16-5 and 16-5' of the upper and lower exposed wiring portions 16 and 16' move upward and downward while the coil spring structure is being compressed, and means for preventing friction noise which are provided on at least one of the upper and lower end wiring portions 14 and 14'. The means for preventing friction noise include rigid support ends 18 which are provided on at least one of the body wiring portion 12 and the upper and lower exposed wiring portions 16 and 16', and absorb shock by
absorbing a compressive load applied from the upper and lower exposed wiring portions 16 and 16' . Since the diameter-increasing portions A provide spaces in which upper and lower exposure start wiring portions 16-5 and 16-5' move upward and downward while the coil spring structure is being compressed, frictional noise between the upper and lower end wiring portions 14 and 14' and the upper and lower exposure start wiring portions 16-5 and 16-5' is prevented. When a compressive load is applied to the coil spring structure, a plurality of wiring portions formed in the upper and lower exposed wiring portions 16 and 16' move upward and downward along the side walls of the rigid support ends 18, thereby increasing elasticity.

Here, since the upper and lower edge members 20 and 20' and the helical coils 30 are well-known in the art, they will be described using the same reference numerals and signs as in FIG. 1A, FIG. 1B and FIG. 2. Disclosure will be limited to coil springs 10 which are sequentially disposed between the upper and lower edge members 20 and 20'

In addition, the coil springs 10 can be implemented as round coil springs, as shown in FIG. 5A, FIG. 5B, FIG. 6A and FIG. 6B, offset coil springs, as shown in FIG. 7A, FIG. 7B, FIG. 8A and FIG. 8B, or round-offset coil springs, as shown in FIG. 9A, FIG. 9B, FIG. 10A, FIG. 10B and FIG. 10C, depending on the shape of the upper and lower end wiring portions 14 and 14' and the structure of the wiring portions.

In addition, when the coil springs 10 are implemented as the round coil springs, the upper exposed wiring portions 16 can be configured as shown in part (a) of FIG. 6A and FIG. 6B (first embodiment), the lower exposed wiring portions 16' can be configured as shown in part (b) of FIG. 6A and FIG. 6B (second embodiment), or both the upper exposed wiring portions 16 and the lower exposed wiring portions 16' can be configured as shown in parts (c) to (e) of FIG. 6A and FIG. 6B (third to fifth embodiments).

Furthermore, when the coil springs 10 are implemented as the offset coil springs, the upper exposed wiring portions 16 can be configured as shown in part (a) of FIG. 8A and FIG. 8B (sixth embodiment), the lower exposed wiring portions 16' can be configured as shown in part (b) of FIG. 8A and FIG. 8B (seventh embodiment), or both the upper exposed wiring portions 16 and the lower exposed wiring portions 16' can be configured as shown in parts (c) to (e) of FIG. 8A and FIG. 8B (eighth to tenth embodiments).

In addition, when the coil springs 10 are implemented as the round-offset coil springs, the upper exposed wiring portions 16 can be configured as shown in part (a) of FIG. 10A and FIG. 10B (eleventh embodiment), the lower exposed wiring portions 16' can be configured as shown in part (b) of FIG. 10A and FIG. 10B (twelfth embodiment), or both the upper exposed wiring portions 16 and the lower exposed wiring portions 16' can be configured as shown in parts (c) to (e) of FIG. 10A and FIG. 10B (thirteenth to fifteenth embodiments).

The diameter-increasing portions A can be applied to any type of the coil springs 10 which are used in the field of bed mattresses in place of the round coil springs, the offset coil springs, or the round-offset coil springs.

In addition, each of the coil springs 10 includes the body wiring portion 12, the upper and lower end wiring portions 14 and 14', the upper and lower exposed wiring portions 16 and 16' and the rigid support ends 18. In particular, the diameter-increasing portion A is provided on at least one of the upper and lower end wiring portions 14 and 14'.

The body wiring portion 12 refers to the wiring portion which forms the main body of the coil spring 10 to support the entire load applied to the coil spring 10. The body wiring portion 12 is interposed in the vertical direction in the space between the upper and lower edge members 20 and 20' in order to absorb the weight of a user. The body wiring portion 12 can have a variety of shapes including the shape of a double-headed drum.

In addition, the upper and lower end wiring portions 14 and 14' refer to the wiring portions which are respectively formed on the upper and lower ends of the body wiring portions 12 so as to extend in the horizontal direction and are positioned within the range in which the upper and lower edge members 20 and 20' are disposed. The upper and lower end wiring portions 14 and 14' are butted to the upper and lower edge members 20, and are fixed using fixing pins or helical coils.

Here, the upper and lower end wiring portions 14 and 14' can be formed at an angle of incline that deviates from the horizontal state, depending on the angle of incline of the upper and lower exposed wiring portions 16 and 16'.

Although the wiring portions are formed at a slightly inclined angle, the upper and lower end wiring portions 14 and 14' can be horizontally set when they are butted to and engaged with the upper and lower edge members 20 and 20' using the helical coils 30.

In addition, the lower end wiring portion 14' forms a linear free end B on the coil end thereof which is opened without being engaged with the wiring portion, as shown in FIG. 10C, or a handcuff portion C on the coil end thereof which is engaged with the wiring portion, as shown in FIG. 11A, FIG. 11B and FIG. 11C.

In addition, as shown in FIG. 11A to FIG. 11C, it is preferred that the upper and lower end wiring portions 14 and 14' have a round, offset or round-offset shape. In particular, one or two convex portions D which increase the inner diameter of the wiring portion may be formed on the upper and/or lower end wiring portions 14 and 14'.

Although it is, of course, possible to make the upper and lower end wiring portions 14 and 14' having the same shape, it is also possible to make the upper and lower end wiring portions having different shapes.

In addition, the upper and lower exposed wiring portions 16 and 16' refer to the wiring portions which extend from the upper end wiring portions 14 and/or the lower end wiring portions 14' and cooperate with the body wiring portions 12 in order to absorb a load applied to the bed mattress. The upper and lower exposed wiring portions 16 and 16' are wound such that their diameter is smaller than the diameter of the body wiring portions 12.

In this case, the body wiring portions 12 absorb shock in response to a large load applied to the bed mattress, whereas the upper and lower exposed wiring portions 16 and 16' absorb shock in response to a smaller load applied to the bed mattress.

Here, the upper and lower exposure start wiring portions 16-5 and 16-5' formed on the upper and lower exposed wiring portions 16 and 16' refer to the portions of the upper and lower exposed wiring portions 16 and 16' which are positioned close to the upper and lower end wiring portions 14 and 14'.

Although the number of turns of the upper and lower exposed wiring portions 16 and 16' is preferably 3 to 6, as shown in FIG. 11A to FIG. 11C, in order to induce high tension to the coil springs 10, the number of turns greater than 6 is also possible.

In addition, as shown in FIG. 11A to FIG. 11C, it is preferred that the upper and lower exposed wiring portions 16 and 16' have a round shape. The upper and lower exposed wiring portions may also have an offset shape or a round-offset shape. The upper and lower exposed wiring portions 16 and 16' may have one or two convex portions D which increase the inner diameter of the wiring portions.

Of course, as shown in FIG. 10C and FIG. 12B, it is preferred that the linear free end B be formed on the coil end of at least one of the upper and lower exposed wiring portions 16 and 16'. In particular, the handcuff portion C may be formed in place of the linear free end B.

The diameter-increasing portions A are configured so as to increase the inner diameter of the upper and lower end wiring portions 14 and 14', thereby defining spaces through which the upper and lower exposure start wiring portions 16-5 and 16-5' can move upward and downward while fundamentally preventing frictional noise. It is preferred that the diameter-increasing portions A be provided by increasing the inner diameter of the upper and lower end wiring portions 14 and 14' so as to be greater than the outer diameter of the upper and lower exposure start wiring portions 16-5 and 16-5'.

In addition, as shown in FIG. 12A, FIG. 12B, FIG. 13A, FIG. 13B, FIG. 14A and FIG. 14B, when the upper and lower exposed wiring portions 16 and 16' are provided with the rigid support ends 18, it is preferred that the inner diameter of the upper and lower end wiring portions 14 and 14' having the diameter-increasing portion A be greater than the outer diameter of the body wiring portion 12 in order to introduce the upper and lower exposed wiring portions 16 and 16' to move upward and downward along the outer circumference of the body wiring portion 12.

In addition, the wiring of the upper and lower end wiring portions 14 and 14' can be formed so as to be inclined at a preset angle with respect to the horizontal surface in the process in which the diameter-increasing portions A are formed. Consequently, there is no contact between the upper and lower end wiring portions 14 and 14' and the upper and lower exposure start wiring portions 16-5 and 16-5', thereby preventing friction noise.

Furthermore, although the shape of the diameter-increasing portions A may correspond to the shape of the upper and lower end wiring portions 14 and 14', it is preferred that the diameter-increasing portions A can have a round shape considering the structural characteristics of the coil springs 1.

In addition, the rigid support ends 18 are provided on at least one of the body wiring portions 12 and the upper and lower exposed wiring portions 16 and 16' so as to absorb a compressive load. When a small load is applied to the bed mattress, the rigid support ends 18 absorb the compressive load using the upper and lower exposed wiring portions 16 and 16'. In contrast, when a large load is applied to the bed mattress, the upper and lower exposed wiring portions 16 and 16' absorb most of the load, and the body wiring portions 12 absorb the remaining load, thereby preventing frictional noise while significantly increasing elasticity.

As shown in parts (a) and (b) of FIG. 6A and FIG. 6B, parts (a) and (b) of FIG. 8A and FIG. 8B, and parts (a) and (b) of FIG. 10A and FIG. 10B, one rigid support end 18 can be provided on the upper or lower portion of each of the body wiring portions 12. In addition, as shown in part (e) of FIG. 6A and FIG. 6B, part (e) of FIG. 8A and FIG. 8B, and part (e) of FIG. 10A and FIG. 10B, the rigid support ends 18 can also be respectively provided between the upper end wiring portions 14 and the lower end wiring portions 14'.

As shown in parts (c) and (d) of FIG. 6A and FIG. 6B, parts (c) and (d) of FIG. 8A and FIG. 8B, and parts (c) and (d) of FIG. 10A and FIG. 10B, a plurality of rigid support ends 18 can also be provided on each of the body wiring portions 12 such that the rigid support ends 18 are spaced apart predetermined distances from each other.

It is, of course, possible that the rigid support ends 18 be formed on the upper and lower exposed wiring portions 16 and 16', as shown in FIG. 12A and FIG. 12B (sixteenth to nineteenth embodiments), FIG. 13A and FIG. 13B (twentieth to twenty third embodiments) and FIG. 14A and FIG. 14B (twenty fourth to twenty seventh embodiments).

In addition, it is preferred that the rigid support ends 18 be provided at a right or acute angle with respect to the upper and lower end wiring portions 14 and 14' or the horizontal surface.

A description will be given below of the operation of the structure.

First, since the process of fabricating the spring assembly 1 and the process of fabricating a bed mattress to which the spring assembly 1 is applied are well known in the art, descriptions thereof will be omitted. Disclosure will be limited to the structure of the coil springs 10 that prevents frictional noise and increases elasticity.

In particular, the operating structure will be described on assumption that the coil springs 10 having the described structure is applied to the bed mattress.

As shown in part (a) of FIG. 5A and FIG. 5B, part (a) of FIG. 7A and FIG. 7B and part (a) of FIG. 9A and FIG. 9B, if no load is applied to the bed mattress to which the coil spring 10 is applied, the upper exposed wiring portion 16 is set such that it protrudes above the upper edge member 20 and stays at that position.

In contrast, as shown in part (b) of FIG. 5A and FIG. 5B, part (b) of FIG. 7A and FIG. 7B and part (b) of FIG. 9A and FIG. 9B, when a small load from the user is applied to the bed mattress to which the coil spring 10 is applied, the upper exposed wiring portion 16 is depressed downward to the amount corresponding to the compressive load, thereby absorbing the compressive load.

In particular, as shown in part (c) of FIG. 5A and FIG. 5B, part (c) of FIG. 7A and FIG. 7B and part (c) of FIG. 9A and FIG. 9B, when a large load is applied to the bed mattress to which the coil spring 10 is applied, the upper exposure start wiring portions 16-5 of the upper exposed wiring portion 16 moves downward through the diameter-increasing portion A, thereby absorbing the compressive load.

In addition, as shown in parts (d) and (e) of FIG. 5A and FIG. 5B, parts (d) and (e) of FIG. 7A and FIG. 7B and parts (d) and (e) of FIG. 9A and FIG. 9B, when a stronger load is applied to the bed mattress to which the coil spring 10 is applied, the upper exposure start wiring portion 16-5 of the upper exposed wiring portion 16 moves further downward through the diameter-increasing portion A such that the range in which the upper exposed wiring portion 16 moves upward and downward is maximized, thereby maximizing the shock-absorbing efficiency.

Since the diameter-increasing portion A of the upper end wiring portion 14 defines the space where the upper exposure start wiring portion 16-5 can move upward and downward, the upper exposure start wiring portion 16-5 does not come into contact with the upper end wiring portion 14 while moving upward and downward.

At this time, when a strong load is applied to the bed mattress, due to the rigid support end 18 of the coil spring 10, the upper and lower exposed wiring portions 16 and 16' absorb most of the load and the body wiring portion 12 absorbs the remaining load, thereby preventing frictional noise and significantly increases elasticity.

Accordingly, when a strong load is applied to the bed mattress to which the coil spring 10 is applied, the diameter-increasing portion A of the upper end wiring portion 14 prevents friction noise between the upper end wiring portion 14 and the other portions of the coil spring 10 and significantly increases the elasticity of the exposed wiring portions 16 and 16' which are formed as a plurality of wiring portions, thereby increasing the longevity of a product and improving the quality of the product.

The foregoing descriptions of the specific exemplary embodiments have been presented for the purposes of illustration with reference to the accompanying drawings.

In summary an embodiment can be described as follows:
A high tension coil spring structure for a bed mattress includes spring bodies and exposed wiring portions which absorb an external load. Diameter-increasing portions (A) are formed on at least one of upper and/or lower end wiring portions (14, 14') of body wiring portions (12), and provide spaces in which upper and/or lower exposure start wiring portions (16-5, 16-5') move upward and downward. Rigid support ends (18) are formed on at least one of the body wiring portions (12) and upper and lower exposed wiring portions (16, 16'), and absorb a compressive load. The diameter-increasing portions and the rigid ends of the coil spring structure fundamentally prevent noise caused by friction between the exposed wiring portions and surrounding wiring portions when the exposed wiring portions are compressed and significantly increase the elasticity of the exposed wiring portions.

## Claims

1. A high tension coil spring structure for a bed mattress comprising:
body wiring portions (12) which are disposed regularly at preset distances from each other in the space between an upper edge member (20) and a lower edge member (20'), upper and lower end wiring portions (14, 14') which are provided on both ends of the body wiring portions (12) and set within the range in which the upper and lower edge members (20, 20') are disposed;
upper exposed wiring portions (16) which extend from the upper end wiring portions (14) so as to be exposed from the upper edge members (20);
diameter-increasing portions (A) which are provided on the upper end wiring portions (14) and define spaces in which upper exposure start wiring portions (16-5) of the upper exposed wiring portions (16) move upward and downward while the coil spring structure is being compressed; and
means for preventing friction noise which are provided on the upper end wiring portions (14), wherein
the means for preventing friction noise include rigid support ends (18) which are provided on at least one of the body wiring portion (12) and the upper exposed wiring portions (16), and absorb shock by absorbing a compressive load applied from the upper exposed wiring portions (16), and
the diameter-increasing portions (A) provide spaces in which upper exposure start wiring portions (16-5) move upward and/or downward while the coil spring structure is being compressed, thereby preventing frictional noise between the upper end wiring portions (14) and the upper exposure start wiring portions (16-5), and when a compressive load is applied to the coil spring structure, a plurality of wiring portions formed in the upper exposed wiring portions (16) move upward and downward along the side walls of the rigid support ends (18), thereby significantly increasing elasticity,
**characterized in that** linear free ends (B) are provided on coil ends of the lower end wiring portions (14'), and are opened without being engaged with wiring portions.

2. The high tension coil spring structure according to claim 1, wherein at least one of the upper and lower end wiring portions (14, 14') has a shape of a round coil spring, and/or
wherein at least one of the upper and lower end wiring portions (14, 14') has a shape of an offset coil spring, and/or
wherein at least one of the upper and lower end wiring portions (14, 14') has a shape of a round offset coil spring.

3. The high tension coil spring structure according to any of the preceding claims, wherein one or two concave portions are provided on at least one of the upper end wiring portions (14) and the lower end wiring portions (14'), the concave portions increasing an inner diameter of the at least one of the upper end wiring portions (14) and the lower end wiring portions (14').

4. The high tension coil spring structure according to any of the preceding claims, wherein the diameter-increasing portions (A) comprise predetermined portions of the upper end wiring portions (14) and/or the lower end wiring portions (14') which increase an inner diameter of the upper and/or lower end wiring portions (14, 14') to be greater than an outer diameter of the upper exposure start wiring portions (16-5) when the rigid support ends (18) are formed on the body wiring portions (12).

5. The high tension coil spring structure according to any of the preceding claims, wherein the diameter-increasing portions (A) comprise predetermined portions of the upper end wiring portions (14) and/or the lower end wiring portions (14') which increase an inner diameter of the upper and/or lower end wiring portions (14, 14') to be greater than an outer diameter of the body wiring portions (12) when the rigid support ends (18) are formed on the upper exposed wiring portions (16).

6. The high tension coil spring structure according to any of the preceding claims, wherein the diameter-increasing portions (A) have a shape of a round spring.

7. The high tension coil spring structure according to any of the preceding claims, wherein the diameter-increasing portions (A) have a shape corresponding to a shape of the upper and lower end wiring portions (14, 14').

8. The high tension coil spring structure according to any of the preceding claims, wherein linear free ends (B) are provided on coil ends of the upper exposed wiring portions (16), and are opened without being engaged with wiring portions.

9. The high tension coil spring structure according to any of the preceding claims, wherein a number of turns of the upper exposed wiring portions (16) ranges from 3 to 6.

10. The high tension coil spring structure according to any of the preceding claims, wherein wiring portions of the upper exposed wiring portions (16) have a round shape.

11. The high tension coil spring structure according to any of the preceding claims, wherein the upper exposed wiring portions (16) have one or two convex portions which increase an inner diameter of wiring portions of the upper exposed wiring portions (16).

12. The high tension coil spring structure according to any of the preceding claims, wherein the rigid support ends (18) are disposed at a right angle with respect to the upper and/or lower end wiring portions (14, 14').

13. The high tension coil spring structure according to any of the preceding claims, wherein the rigid support ends (18) are disposed at an acute angle with respect to the upper and/or lower end wiring portions (14, 14').

## Patentansprüche

1. Hochspannungsschraubenfederstruktur für eine Bettmatratze, umfassend folgendes:
Körperdrahtbereiche (12), die regelmäßig in voreingestellten Abständen von einander in dem Raum zwischen einem oberen Randelement (20) und einem unteren Randelement (20') angeordnet sind, obere und untere Enddrahtbereiche (14, 14'), die an beiden Enden der Körperdrahtbereiche (12) vorgesehen und innerhalb des Bereichs eingestellt sind, in dem die oberen und unteren Randelemente (20, 20') angeordnet sind;
obere exponierte Drahtbereiche (16), die sich von den oberen Enddrahtbereichen (14) derart erstrecken, dass sie von den oberen Randelementen (20) exponiert sind;
durchmessererhöhende Bereiche (A), die an den oberen Enddrahtbereichen (14) vorgesehen sind und Räume definieren, in denen obere Expositionsstartdrahtbereiche (16-5) der oberen exponierten Drahtbereiche (16) sich aufwärts und abwärts bewegen, während die Schraubenfederstruktur komprimiert wird; und
Mittel zur Verhinderung von Reibungslärm, die an den oberen Enddrahtbereichen (14) vorgesehen sind, wobei
die Mittel zum Verhindern von Reibungslärm starre Stützenden (18) umfassen, die an dem Körperdrahtbereich (12) und/oder den oberen exponierten Drahtbereichen (16) vorgesehen sind, und die einen Stoß durch absorbieren einer Kompressionslast absorbieren, die von den oberen exponierten Drahtbereichen (16) ausgeübt wird, und
die durchmessererhöhenden Bereiche (A) Räume bereitstellen, in denen obere Expositionsstartdrahtbereiche (16-5) sich aufwärts und/oder abwärts bewegen, während die Schraubenfederstruktur komprimiert wird, wodurch Reibungslärm zwischen dem oberen Enddrahtbereichen (14) und den oberen Expositionsstartdrahtbereichen (16-5) verhindert wird, und wenn eine Kompressionslast auf die Schraubenfederstruktur ausgeübt wird, eine Mehrzahl von Drahtbereichen, gebildet in den oberen exponierten Drahtbereichen (16), sich aufwärts und abwärts entlang der Seitenwände der starren Stützenden (18) bewegen, wodurch die Elastizität signifikant erhöht wird,
**dadurch gekennzeichnet, dass** lineare freie Enden (B) an Schraubenenden der unteren Enddrahtbereiche (14') vorgesehen und geöffnet sind, ohne an Drahtbereichen anzugreifen.

2. Hochspannungsschraubenfederstruktur nach Anspruch 1, wobei wenigstens einer von den oberen und unteren Enddrahtbereichen (14, 14') eine Gestalt einer runden Schraubenfeder hat,
und/oder
wobei wenigstens einer von den oberen und unteren Enddrahtbereichen (14, 14') eine Gestalt einer versetzten Schraubenfeder hat,
und/oder
wobei wenigstens einer von den oberen und unteren Enddrahtbereichen (14, 14') eine Gestalt einer runden versetzten Schraubenfeder hat.

3. Hochspannungsschraubenfederstruktur nach einem der vorhergehenden Ansprüche, wobei ein oder zwei konkave Bereiche an wenigstens einem von den oberen Enddrahtbereichen (14) und den unteren Enddrahtbereichen (14') vorgesehen sind, wobei die konkaven Bereiche einen Innendurchmesser des wenigstens einen von den oberen Enddrahtbereichen (14) und den unteren Enddrahtbereichen (14') erhöhen.

4. Hochspannungsschraubenfederstruktur nach einem der vorhergehenden Ansprüche, wobei die durchmessererhöhenden Bereiche (A) vorbestimmte Bereiche der oberen Enddrahtbereiche (14) und/oder der unteren Enddrahtbereiche (14') umfassen, die einen Innendurchmesser der oberen und/oder unteren Enddrahtbereiche (14, 14') derart erhöhen, dass er größer als ein Außendurchmesser der oberen Expositionsstartdrahtbereiche (16-5) ist, wenn die starren Stützenden (18) an den Körperdrahtbereichen (12) gebildet sind.

5. Hochspannungsschraubenfederstruktur nach einem der vorhergehenden Ansprüche, wobei die durchmessererhöhenden Bereiche (A) vorbestimmte Bereiche der oberen Enddrahtbereiche (14) und/oder der unteren Enddrahtbereiche (14') umfassen, die einen Innendurchmesser der oberen und/oder unteren Enddrahtbereiche (14, 14') derart erhöhen, dass er größer ist als ein Außendurchmesser der Körperdrahtbereiche (12), wenn die starren Stützenden (18) an den oberen exponierten Drahtbereichen (16) gebildet sind.

6. Hochspannungsschraubenfederstruktur nach einem der vorhergehenden Ansprüche, wobei die durchmessererhöhenden Bereiche (A) eine Gestalt einer runden Feder haben.

7. Hochspannungsschraubenfederstruktur nach einem der vorhergehenden Ansprüche, wobei die durchmessererhöhenden Bereiche (A) eine Gestalt entsprechend einer Gestalt der oberen und unteren Enddrahtbereiche (14,14') haben.

8. Hochspannungsschraubenfederstruktur nach einem der vorhergehenden Ansprüche, wobei lineare freie Enden (B) an Schraubenenden der oberen exponierten Drahtbereiche (16) vorgesehen und geöffnet sind, ohne an Drahtbereichen anzugreifen.

9. Hochspannungsschraubenfederstruktur nach einem der vorhergehenden Ansprüche, wobei eine Zahl von Wicklungen der oberen exponierten Drahtbereiche (16) von 3 bis 6 reicht.

10. Hochspannungsschraubenfederstruktur nach einem der vorhergehenden Ansprüche, wobei Drahtbereiche der oberen exponierten Drahtbereiche (16) eine runde Gestalt haben.

11. Hochspannungsschraubenfederstruktur nach einem der vorhergehenden Ansprüche, wobei obere exponierte Drahtbereiche (16) einen oder zwei konvexe Bereiche haben, die einen Innendurchmesser von Drahtbereichen der oberen exponierten Drahtbereiche (16) erhöhen.

12. Hochspannungsschraubenfederstruktur nach einem der vorhergehenden Ansprüche, wobei die starren Stützenden (18) unter einem rechten Winkel mit Bezug zu den oberen und/oder unteren Enddrahtbereichen (14, 14') angeordnet sind.

13. Hochspannungsschraubenfederstruktur nach einem der vorhergehenden Ansprüche, wobei die starren Stützenden (18) unter einem spitzen Winkel mit Bezug zu den oberen und/oder unteren Enddrahtbereichen (14, 14') angeordnet sind.

## Revendications

1. Structure de ressort à spirale haute tension pour un matelas comprenant :
des portions de fil de corps (12) qui sont disposées régulièrement à des distances préétablies les unes des autres dans l'espace entre un organe de bord supérieur (20) et un organe de bord inférieur (20'), des portions de fil d'extrémité supérieures et inférieures (14, 14') qui sont prévues sur les deux extrémités des portions de fil de corps (12) et établies au sein de la plage dans laquelle les organes de bord supérieur et inférieur (20, 20') sont disposés ;
des portions de fil exposées supérieures (16) qui s'étendent depuis les portions de fil d'extrémité supérieures (14) de façon à être exposées depuis les organes de bord supérieurs (20) ;
des portions de diamètre croissant (A) qui sont prévues sur les portions de fil d'extrémité supérieures (14) et définissent des espaces dans lesquels des portions de fil de début d'exposition supérieures (16-5) des portions de fil exposées supérieures (16) montent et descendent tandis que la structure de ressort à spirale est comprimée ; et
des moyens pour empêcher un bruit de frottement qui sont prévus sur les portions de fil d'extrémité supérieures (14), dans laquelle
les moyens pour empêcher un bruit de frottement comprennent des extrémités de support rigides (18) qui sont prévues sur au moins l'une de la portion de fil de corps (12) et des portions de fil exposées supérieures (16), et absorbent un choc en absorbant une charge de compression appliquée depuis les portions de fil exposées supérieures (16), et
les portions de diamètre croissant (A) fournissent des espaces dans lesquels des portions de fil de début d'exposition supérieures (16-5) montent et/ou descendent tandis que la structure de ressort à spirale est comprimée, empêchant ainsi un bruit de frottement entre les portions de fil d'extrémité supérieures (14) et les portions de fil de début d'exposition supérieures (16-5), et lorsqu'une charge de compression est appliquée à la structure de ressort à spirale, une pluralité de portions de fil formées dans les portions de fil exposées supérieures (16) montent et descendent le long des parois de côté des extrémités de support rigides (18), augmentant ainsi significativement l'élasticité,
**caractérisée en ce que**
des extrémités libres linéaires (B) sont prévues sur des extrémités de spirale des portions de fil d'extrémité inférieures (14'), et sont ouvertes sans être enclenchées avec des portions de fil.

2. Structure de ressort à spirale haute tension selon la revendication 1, dans laquelle au moins l'une des portions de fil d'extrémité supérieures et inférieures (14,14') a une forme d'un ressort à spirale rond, et/ou
dans laquelle au moins l'une des portions de fil d'extrémité supérieures et inférieures (14, 14') a une forme d'un ressort à spirale décalé, et/ou
dans laquelle au moins l'une des portions de fil d'extrémité supérieures et inférieures (14, 14') a une forme d'un ressort à spirale décalé rond.

3. Structure de ressort à spirale haute tension selon l'une quelconque des revendications précédentes, dans laquelle une ou deux portions concaves sont prévues sur au moins l'une des portions de fil d'extrémité supérieures (14) et des portions de fil d'extrémité inférieures (14'), les portions concaves augmentant un diamètre intérieur de l'au moins une des portions de fil d'extrémité supérieures (14) et des portions de fil d'extrémité inférieures (14').

4. Structure de ressort à spirale haute tension selon l'une quelconque des revendications précédentes, dans laquelle les portions de diamètre croissant (A) comprennent des portions prédéterminées des portions de fil d'extrémité supérieures (14) et/ou des portions de fil d'extrémité inférieures (14') qui augmentent un diamètre intérieur des portions de fil d'extrémité supérieures et/ou inférieures (14, 14') pour qu'il soit plus grand qu'un diamètre extérieur des portions de fil de début d'exposition supérieures (16-5) lorsque les extrémités de support rigides (18) sont formées sur les portions de fil de corps (12).

5. Structure de ressort à spirale haute tension selon l'une quelconque des revendications précédentes, dans laquelle les portions de diamètre croissant (A) comprennent des portions prédéterminées des portions de fil d'extrémité supérieures (14) et/ou des portions de fil d'extrémité inférieures (14') qui augmentent un diamètre intérieur des portions de fil d'extrémité supérieures et/ou inférieures (14, 14') pour qu'il soit plus grand qu'un diamètre extérieur des portions de fil de corps (12) lorsque les extrémités de support rigides (18) sont formées sur les portions de fil exposées supérieures (16).

6. Structure de ressort à spirale haute tension selon l'une quelconque des revendications précédentes, dans laquelle les portions de diamètre croissant (A) ont une forme d'un ressort rond.

7. Structure de ressort à spirale haute tension selon l'une quelconque des revendications précédentes, dans laquelle les portions de diamètre croissant (A) ont une forme correspondant à une forme des portions de fil d'extrémité supérieures et inférieures (14, 14').

8. Structure de ressort à spirale haute tension selon l'une quelconque des revendications précédentes, dans laquelle des extrémités libres linéaires (B) sont prévues sur des extrémités de spirale des portions de fil exposées supérieures (16), et sont ouvertes sans être enclenchées avec des portions de fil.

9. Structure de ressort à spirale haute tension selon l'une quelconque des revendications précédentes, dans laquelle un nombre de spires des portions de fil exposées supérieures (16) va de 3 à 6.

10. Structure de ressort à spirale haute tension selon l'une quelconque des revendications précédentes, dans laquelle des portions de fil des portions de fil exposées supérieures (16) ont une forme ronde.

11. Structure de ressort à spirale haute tension selon l'une quelconque des revendications précédentes, dans laquelle les portions de fil exposées supérieures (16) ont une ou deux portions convexes qui augmentent un diamètre intérieur de portions de fil des portions de fil exposées supérieures (16).

12. Structure de ressort à spirale haute tension selon l'une quelconque des revendications précédentes, dans laquelle les extrémités de support rigides (18) sont disposées à angle droit par rapport aux portions de fil d'extrémité supérieures et/ou inférieures (14, 14').

13. Structure de ressort à spirale haute tension selon l'une quelconque des revendications précédentes, dans laquelle les extrémités de support rigides (18) sont disposées à un angle aigu par rapport aux portions de fil d'extrémité supérieures et/ou inférieures (14, 14').
